# EUROPEAN PATENT APPLICATION

(11) **EP 4 831 068 A1**
(43) Date of publication of application: **28.10.2026**
(21) Application number: 23962246.7
(22) Date of filing: 21.12.2023
(51) Int. Cl.: B64G 1/68, B64G 1/10, B64G 1/22, B64G 1/24

(54) **DEORBITING DEVICE AND INFORMATION PROCESSING SYSTEM**

(71) Applicant: Bull Co., Ltd., Utsunomiya-shi, Tochigi 320-0806 (JP)
(72) Inventor: KAWAMURA, Masaaki, Utsunomiya-shi, Tochigi 320-0806 (JP); KAMACHI, Koh, Utsunomiya-shi, Tochigi 320-0806 (JP); TSURUDA, Yoshihiro, Utsunomiya-shi, Tochigi 320-0806 (JP); ISHIGAKI, Nozomu, Utsunomiya-shi, Tochigi 320-0806 (JP); UTO, Yasuhito, Utsunomiya-shi, Tochigi 320-0806 (JP)
(74) Representative: Bardehle Pagenberg Partnerschaft mbB Patentanwälte Rechtsanwälte
(86) International application number: PCT/JP2023/045987
(87) International publication number: WO 2025/134326

(57) **Abstract**

A deorbit device that allows for low-cost detection of environmental information indicating an environment in space at various altitudes is provided. The deorbit device according to one aspect of the present invention is mounted on an object moving in an orbit in space. The deorbit device includes: a drag generator that generates drag on a movement of the object in the orbit; a detection unit that detects environmental information indicating a predetermined environment while the drag generator is generating the drag; a storage unit; and an environmental information processing unit that stores the environmental information in the storage unit.

## Description

### Technical Field

The present invention relates to a deorbit device and an information processing system.

### Background Art

Understanding the outer space environment is crucial in space development. For example, Patent Literature 1 describes a detection sheet member to be mounted on spacecraft orbiting around the Earth. This detection sheet member includes a thin film of an insulating material, detection lines that break when hit by a floating object in space, and a detection circuit that detects breakage of the detection lines.

### Citation List

### Patent Literature

Patent Literature 1: Japanese Patent No. 5492568

### Summary of Invention

### Technical Problem

In the space environment, for instance, gravity, radiation distribution, and atmospheric density vary according to the altitude of the orbit. A spacecraft normally stays in an orbit at a constant altitude. To understand the environment at various altitudes, multiple spacecrafts are required to make measurements in every orbit at a different altitude, which is extremely costly.

Accordingly, an object of the present invention is to provide a deorbit device that allows for low-cost detection of environmental information indicating an environment in space at various altitudes.

### Solution to Problem

A deorbit device according to one aspect of the present invention is a deorbit device mounted on an object that moves in an orbit in space, and includes: a drag generator configured to generate drag on a movement of the object in the orbit; a detection unit configured to detect environmental information indicating a predetermined environment in space while the drag generator is generating the drag; a storage unit; and an environmental information processing unit that stores the environmental information in the storage unit.

According to this aspect, it is possible to detect environmental information indicating an environment in space using the detection unit, while deorbiting the object by generating drag on the movement of the object using the drag generator.

### Advantageous Effect of Invention

The present invention can provide a deorbit device that allows for low-cost detection of environmental information indicating an environment in space at various altitudes.

### Brief Description of Drawings

[Figure 1] Figure 1 is a schematic diagram illustrating a state of a deorbit device 3 mounted on a spacecraft 2.
[Figure 2] Figure 2 is a schematic diagram illustrating another state of the deorbit device 3 mounted on the spacecraft.
[Figure 3] Figure 3 is a block diagram illustrating one example of a functional configuration of the deorbit device 3.
[Figure 4] Figure 4 is a schematic diagram illustrating a configuration example of a debris sensor 39 provided to a tether 31.
[Figure 5] Figure 5 is a functional block diagram illustrating one example of a functional configuration of a control device 36.
[Figure 6A] Figure 6A is a schematic diagram illustrating an example of a cross section perpendicular to a longitudinal direction of a modified tether 31 of the deorbit device 3.
[Figure 6B] Figure 6B is a schematic diagram illustrating an example of a cross section perpendicular to a longitudinal direction of a modified tether 31 of the deorbit device 3.
[Figure 6C] Figure 6C is a schematic diagram illustrating an example of a cross section perpendicular to a longitudinal direction of a modified tether 31 of the deorbit device 3.
[Figure 6D] Figure 6D is a schematic diagram illustrating an example of a cross section perpendicular to a longitudinal direction of a modified tether 31 of the deorbit device 3.
[Figure 7A] Figure 7A is a schematic diagram illustrating an example of a portion of a modified tether 31e as viewed from a direction perpendicular to a longitudinal direction.
[Figure 7B] Figure 7B is a schematic diagram illustrating an example of a cross section taken parallel to a longitudinal direction of a portion of a modified tether 31e.
[Figure 8] Figure 8 is a schematic diagram illustrating an example of a rocket 100.
[Figure 9] Figure 9 is a schematic diagram illustrating a configuration example of a mapping system 200 according to another embodiment.

### Description of Embodiments

Preferred embodiments of the present invention are described with reference to the accompanying drawings. (Elements given the same reference numerals in each drawing have the same or similar configuration.)

### (1) Overall configuration of deorbit device 3

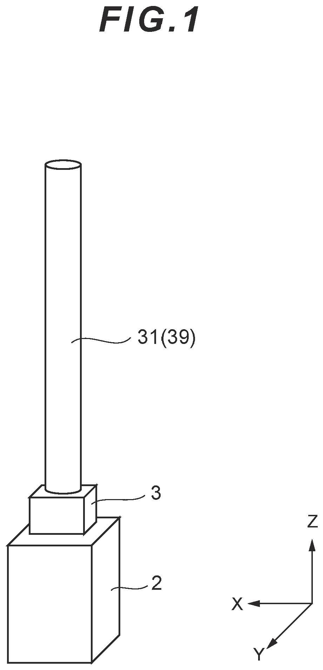

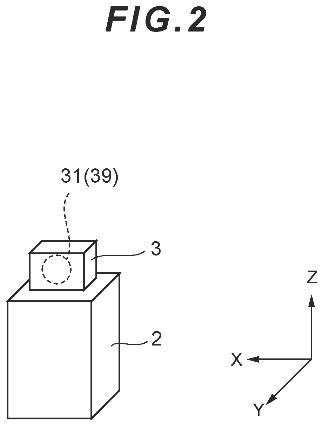

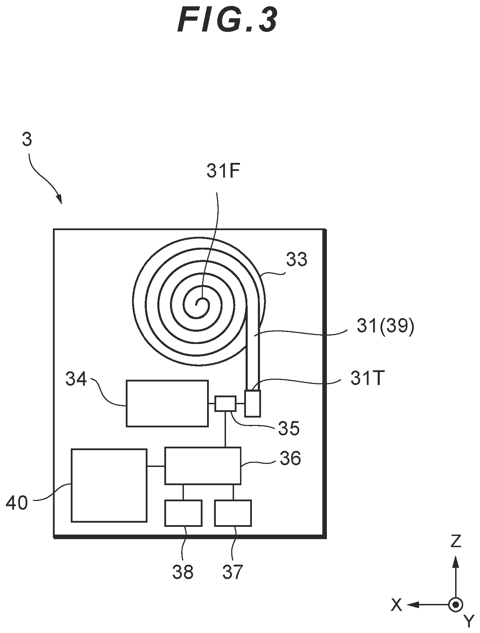

The overall configuration of a deorbit device 3 according to this embodiment is described with reference to Figure 1 to Figure 3. Figure 1 is a schematic diagram illustrating a state of the deorbit device 3 mounted on a spacecraft 2. Figure 2 is a schematic diagram illustrating another state of the deorbit device 3 mounted on the spacecraft. Figure 3 is a block diagram illustrating one example of a functional configuration of the deorbit device 3. In Figure 1 to Figure 3, the direction in which the spacecraft 2 moves (i.e., the direction of an orbit such as a geocentric orbit) is defined as the X-axis. The horizontal direction perpendicular to the X-axis is defined as the Y-axis. The direction perpendicular to both the X-axis and the Y-axis is defined as the Z-axis.

The spacecraft 2 is an example of an object on which the deorbit device 3 is mounted, which moves in an orbit, such as a geocentric orbit, in space. The spacecraft 2 may be any object that moves in orbit. Examples of spacecraft include artificial satellites, rockets, space stations, or a part or section of any of these. The altitude of the orbit may be, for example, from about 200 to 1,000 km, without being limited thereto. The spacecraft 2 is rotating about itself at various speeds and in various directions while moving in orbit. The spacecraft 2 may optionally include a device for attitude control, such as a reaction wheel that rotates about a predetermined axis at a predetermined speed.

The deorbit device 3 is a device mounted on the spacecraft 2 for deorbiting the spacecraft 2 by generating drag on the orbiting movement of the spacecraft 2. The deorbit device 3 is configured to be able to detect environmental information indicating a predetermined environment in space while generating the drag. For this purpose, the deorbit device 3 includes a tether 31, a storage part 33, a gas supply part 34, an electromagnetic valve 35, a control device 36, a communication device 37, a power supply unit 38, and a debris sensor 39.

The tether 31 is an example of a drag generator that generates drag on the movement of the spacecraft 2 in orbit. The tether 31 may be configured to form a predetermined shape. The predetermined shape may be, for example, a three-dimensional shape, such as a column, as described later, or may be a flat shape with a negligible thickness relative to the longitudinal dimension, without being limited thereto.

The tether 31 may have an inflatable structure. For example, it is configured to expand into a predetermined shape by gas supplied to its interior from the gas supply part 34. For example, the tether 31 may be made of one or a plurality of flexible thin film members. The tether 31 may also include glue margins, for example, where multiple thin film members are bonded together. These glue margins can also form a region for experiencing atmospheric drag. The material forming the thin film member may include, for example, resin, adhesive, carbon fiber-reinforced plastics (CFRP), carbon film, and the like. The thin film member may be made of a material including one or a plurality of conductive materials, such as aluminum or other metallic fibers, conductive high-strength fibers, or metal thin films. These conductive materials may be stacked upon one another. This allows for the generation of the Lorentz force on the tether 31 moving in space. The Lorentz force functions as the drag on the spacecraft 2 moving in orbit in addition to or in place of the atmospheric drag. If the debris sensor 39 is provided to at least a portion of the tether 31 as will be described later, the tether 31 may be made of an insulating thin film.

One end portion of the tether 31 may be configured as a fixed end 31T fixedly attached inside a housing of the deorbit device 3, while the other end portion may be configured as a free end 31F not secured inside the deorbit device 3 housing. The deorbit device 3 is configured to accommodate the tether 31 inside, for example as shown in Figure 2, during a mission of the spacecraft 2. The deorbit device 3 is configured to release the free end 31F of the tether 31 into space at a predetermined timing such as when the mission of the spacecraft 2 is complete, and to deploy the tether 31 by supplying a predetermined gas into its interior so as to expand the tether 31 into the predetermined shape. Figure 1 shows a state of the tether 31 deployed outside the housing of the deorbit device 3. The tether 31 is configured tiltable when deployed relative to the Z-axis with reference to the housing of the deorbit device 3 as a base point. While the tether 31 is depicted parallel to the Z-axis in Figure 1, the tether 31 is configured tiltable with reference to the housing of the deorbit device 3 as a base point to form a predetermined angle relative to the Z-axis according to gravity gradient and atmospheric drag. The area of the tether 31 is not limited to a specific value. For example, the tether may have a larger area than the object on which the deorbit device 3 is mounted, such as the spacecraft 2.

The predetermined shape of the deployed tether 31 can be a shape that is able to experience enough atmospheric drag to remove the spacecraft 2 from orbit. For example, the predetermined shape may be a shape having high isotropy about the longitudinal direction of the tether 31 (the Z-axis direction in Figure 1). The higher the isotropy about the longitudinal direction of the tether 31 (the Z-axis direction in Figure 1), the less variation in atmospheric drag the tether 31 experiences when rotating about the axis. The tether is less likely to rotate about its axis, i.e., its attitude about the longitudinal direction is stabilized. This allows the tether to have enough projected area to experience atmospheric drag regardless of its attitude about the longitudinal direction.

One example of a shape having high isotropy about the longitudinal direction of the tether 31 (the Z-axis direction in Figure 1) may be a substantially columnar shape such as the one shown in Figure 1. In this case, the longitudinal dimension of the tether 31 may be, for example, from several meters to several kilometers, without being limited thereto.

The tether 31 can be subjected to gravity gradient. Gravity gradient is a force that orients an object's attitude toward a predetermined direction due to spatial variations in the gravitational acceleration acting on the object. More specifically, when an object orbiting around a center of gravity, such as the Earth, has an elongated shape like the tether 31, the gravity gradient produces a force that tends to align the longitudinal direction of the object toward the center of gravity. In other words, a force acts to decrease the angle between the length direction and the Z-axis.

As the longitudinal dimension of the tether 31 increases, the gravity gradient becomes more effective, causing the tether's longitudinal direction to align more readily with the zenith (opposite the Earth's center) or the nadir (toward the Earth's center). The tether 31 according to this embodiment may be designed with dimensions such that the longitudinal direction of the deployed tether 31 is effectively controlled to align with the zenith or nadir by the gravity gradient acting thereon. Specifically, the tether may have an aspect ratio L/W, where L represents the longitudinal dimension and W represents the transverse dimension relative to the three-dimensional shape of the tether 31, set to a predetermined threshold or greater, such that the longitudinal direction of the tether 31, oriented toward the zenith or nadir, does not tilt as far as to a predetermined angle even under atmospheric drag. This ensures that the tether 31 does not tilt so far that its longitudinal direction forms the predetermined angle θ relative to the Z axis, which passively assists in maintaining an attitude for experiencing atmospheric drag, thereby enabling the tether to experience a high level of atmospheric drag for deorbiting.

The storage part 33 may be configured, for example, to include an internal space to accommodate the tether 31. The tether 31 may be stored in the storage part 33 in any manner not being limited to any aspect. For example, the tether 31 may be coiled as shown in Figure 3, or may be folded.

The gas supply part 34 may store gas that is to be supplied to the tether 31. The gas supply part 34 may be configured as a gas cartridge, for example. The gas supplied to the tether 31 may be any gas including, but not limited to, nitrogen gas, for example.

The electromagnetic valve 35 may be connected to each of the gas supply part 34 and the tether 31. The electromagnetic valve 35 may regulate the amount of gas supplied from the gas supply part 34 to the tether 31 by adjusting the degree of opening based on a control signal received from the control device 36.

One end portion 31T of the tether 31 may be configured as a fixed end fixedly attached to the housing of the deorbit device 3 at a predetermined position. This tether end portion 31T may be connected to the gas supply part 34 via the electromagnetic valve 35. The other end portion 31F of the tether 31 may be configured as a free end that is not fixed to the housing of the deorbit device 3. The tether 31 may be stored in the storage part 33 during a mission of the spacecraft 2, for example.

The debris sensor 39 is provided to at least a portion of the tether 31. The debris sensor 39 is an example of a detection unit that detects environmental information in space. The debris sensor 39 detects, as one example of environmental information, collisions with debris, which is one example of a floating object in space, under the control by a control unit 361 to be described later (e.g., environmental information processing unit 361b). The size of the debris detectable by the debris sensor 39 may be, for example, 1 mm or less, or 50 µm or less in diameter , without being limited thereto. The debris sensor 39 may be provided to at least a portion of the tether 31. Providing the debris sensor 39 to at least a portion of the tether 31 can ensure an area of the debris sensor 39.

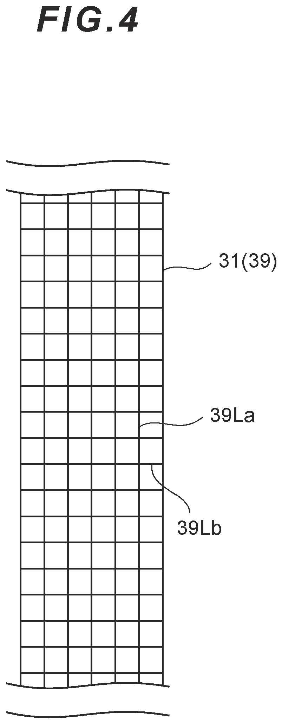

The configuration of the debris sensor 39 provided to the tether 31 is described with reference to Figure 4. The debris sensor 39 is provided on an outer surface of the tether 31, for example. The debris sensor 39 can be configured, for example, to include a multiplicity of detection lines 39La and 39Lb at a predetermined array pitch (spatial period) on the insulating thin film of the tether 31. The detection lines 39La extend along the longitudinal direction of the tether 31, while the detection lines 39Lb extend along the transverse direction of the tether 31. The debris sensor 39 may include only one of the detection lines 39La extending along the longitudinal direction of the tether 31 and the detection lines 39Lb extending along the transverse direction of the tether 31. The detection lines 39La and the detection lines 39Lb may be insulated from each other. A detection circuit (not shown) is connected to each of the detection lines 39La and 39Lb of the debris sensor 39. The detection circuit detects whether or not each detection line 39La or 39Lb is conducting, and sends a detection signal obtained by this detection to the control device 36. When any of the detection lines 39La and 39Lb is hit by debris and breaks, the detection line 39La or 39Lb transitions from a conductive state to a non-conductive state where there is no conduction. Thus, when a detection signal from one detection line 39La or 39Lb indicates a non-conductive state, the control device 36 can determine that one of the detection lines 39La or 39Lb has broken due to debris hitting a point on the line(s). The detection lines 39La and 39Lb may be herein referred to collectively as detection lines 39.

The array pitch (spatial period) of the detection lines 39La and 39Lb can be set to a value corresponding to the particle size of the floating objects in space that are desired to be detected. Specifically, for example, if it is desired to detect floating objects in space with an effective diameter of about 100 µm or more, copper-foil detection lines 3, each 50 µm thick, is formed in parallel at 50 µm intervals by etching or other techniques on one side of about 50-µm-thick thin film tether 31 made of polyimide or the like, so that the debris sensor 39 has the detection lines 39La and 39Lb arrayed at a pitch of 100 µm corresponding to the lower limit of the particle size of the floating objects to be detected. One or more detection lines 39L from among the detection lines 39L arrayed on one side of the debris sensor 39 will break when a floating object in space with an effective diameter of 100 µm or more collides with the debris sensor 39.

The debris sensor 39 detects information about debris collisions, as an example of environmental information. The debris sensor 39 may detect a colliding position or a size of the colliding debris based on which detection line 39L broke, for example. The debris sensor 39 may detect a time of collision with debris based on the time when a detection line 39L broke, for example. The time can be generated by an internal clock (not shown) of the deorbit device 3 or acquired from an outside source via the communication unit 37.

When a detection line 39L breaks at multiple points, for example, the debris sensor 39 may determine, under predetermined conditions, that a single piece of debris has caused the series of breakage by hitting the line sequentially. The predetermined conditions may include, for example, a period of less than a predetermined duration within which the plural instances of breakage occurred. The debris sensor 39 may also detect the colliding direction of the debris based on the plural positions where breakage occurred. Specifically, when a detection line 39L broke at a first position and a second position, the debris sensor 39 may determine a direction including the first and second positions as the colliding direction of the debris.

When the tether 31 has an inflatable structure, the tether 31 has a thin film that constitutes the tether 31 and that is placed around the gas that fills the tether 31. If the debris sensor 39 is provided to at least a portion of the tether 31 having an inflatable structure, the plural detection points on the debris sensor 39 are also placed around the gas that fills the tether 31, making it easy to maintain the detection points at constant intervals. This improves the detection accuracy of the debris sensor 39 in detecting the information on debris collisions.

The deorbit device 3 may include a sensor that detects an orientation of the tether 31. This sensor may supply a detection signal indicating an orientation of the tether 31 to the control unit 36. The environmental information processing unit 361b in the control unit 36 may take into account the detection signal indicating an orientation of the tether 31 acquired from the sensor when calculating the colliding direction of the debris. For example, the environmental information processing unit 361b may calculate the direction based on a point of breakage on the debris sensor 39, and correct it based on an orientation of the tether 31 indicated by the detection signal.

As mentioned above, the tether controller 361a may deploy the tether 31 such as to maintain a fixed ratio between a descent rate of the deorbit device 3 (spacecraft 2) and the deployment rate of the tether 31. In this case, the environmental information processing unit 361b may use a portion of the debris sensor 39 that has not been broken by a collision with debris, i.e., a portion that has been newly deployed by the tether controller 361a, for the detection of debris. According to this aspect, the portion of the debris sensor 39 where substantially no breakage has occurred due to a collision with debris can be used for debris detection as the deorbit device 3 lowers its altitude, so that the accuracy of debris detection is improved.

A position sensor 40 is an example of a position acquisition unit that acquires position information indicating a position associated with an environment detected by a detection unit such as the debris sensor 39 (a predetermined environment in space). The position information indicating the position of the deorbit device 3 may include information indicating the position of the spacecraft 2.

The position sensor 40 can acquire the altitude of the deorbit device 3 when a piece of debris hits the debris sensor 39 as the position information, for example, and determine it as the altitude of the colliding piece of debris. The altitude can be acquired by the position sensor 40 by any method including but not limited to, for example, a method of measuring the time it takes for a radar wave to be reflected back after being emitted from the position sensor 40 toward the Earth's surface; a method of calculating the altitude based on GPS signals received from multiple GPS satellites, or a method of calculating the altitude based on a measured gravity field of the Earth.

The position sensor 40 can acquire the latitude and longitude of the deorbit device 3 when a piece of debris hits the debris sensor 39 as the position information, for example, and determine them as the latitude and longitude of the colliding piece of debris. The position sensor 40 may acquire a latitude and a longitude by any method including but not limited to a method of calculating an altitude based on GPS signals received from multiple GPS satellites, for example. The position information acquired by the position sensor 40 may be, for example, parameters for identifying the orbit of the piece of debris that collided with the debris sensor 39. For example, the parameters can include semi-major axis, orbital eccentricity, orbital inclination, right ascension of ascending node, argument of periapsis, true anomaly, or the like, which can be estimated or derived from debris information to be described later.

The communication device 37 is an example of a communication unit; it is a communication module including an antenna and a communication circuit for sending and receiving signals and data to and from some external equipment according to a predetermined communication method. The communication device 37 may communicate with a management apparatus on the ground, other spacecraft, or various apparatuses such as other deorbit devices mounted on other spacecraft. Specifically, the communication device 37 may receive signals from these apparatuses and provide them to the control device 36. The communication device 37 may also transmit signals from the control device 36 to these apparatuses. The methods of communication performed by the communication device 37 (communication method) may include, for example, any radio wave or light communication technologies including but not limited to a satellite phone network, optical satellite communication, and the like. The communication can use selectable frequency bands. The communication device 37 may perform a communication method via a satellite internet that uses a satellite internet constellation such as Starlink. For example, the communication device 37 may include a plurality of communication units that operate using different methods. Using different communication methods here means that the configurations of these methods such as the protocols (regardless of layers) and channels are different. This enables communication to be maintained using an alternative method in the event that one method of communication fails due to an issue.

The power supply unit 38 supplies power to the deorbit device 3, for example. The power supply unit 38 may include a battery capable of maintaining (storing) power to be supplied to the deorbit device 3, for example. The battery in the power supply unit 38 may be configured to be able to maintain power to be supplied to the deorbit device 3. The battery in the power supply unit 38 may be configured to be able to maintain power to be supplied to the spacecraft 2. The battery in the power supply unit 38 can have any configuration including but not limited to a lithium ion rechargeable battery, fuel cell, or the like.

The power supply unit 38 may include a power generation unit that generates power to be supplied to the deorbit device 3, for example. The power generation unit in the power supply unit 38 may be configured to be able to supply the generated power to the deorbit device 3. The power generation unit in the power supply unit 38 can have any configuration as long as it can generate power, including but not limited to thin films for solar power generation, such as silicon-based thin films (e.g., crystalline silicon or amorphous silicon), compound-based thin films (e.g., CIS and CdTe), dye-sensitized or perovskite thin films, or organic thin films (e.g., paint-based films). The power generation unit in the power supply unit 38 may be placed anywhere on the deorbit device 3 so as to be able to receive light such as sunlight. For example, the power generation unit may be positioned on an outer surface of an outer shell that stores the deorbit device. Alternatively, the power generation unit in the power supply unit 38 may be provided to at least a portion of the tether 31. The tether 31 can be designed to have a greater surface area than the spacecraft 2 when deployed into its predetermined shape, and making efficient use of such a large surface area of the tether 31 can further improve the efficiency of power generation by the power generation unit. If the tether 31 is configured to include a conductive material, the power generation unit can generate some of the power to be supplied to the deorbit device 3 based on the current that flows through the tether 31 due to an induced electromotive force.

The control device 36 provides overall control of the deorbit device 3. The control device 36 may be configured as a computer that includes a processor, such as a CPU (Central Processing Unit), and a memory, such as a RAM (Random Access Memory) and a ROM (Read Only Memory).

### (2) Control of deorbit device 3

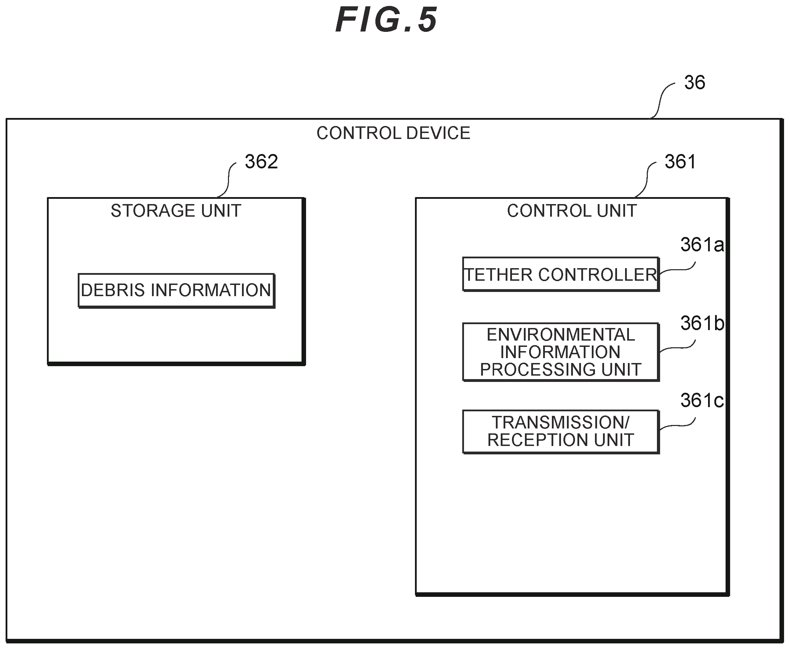

The control of the deorbit device 3 by the control device 36 is described with reference to Figure 5. Figure 5 is a functional block diagram illustrating one example of a functional configuration of a control device 36. The control device 36 includes a control unit 361 and a storage unit 362. The control unit 361 includes a tether controller 361a, an environmental information processing unit 361b, and a transmission/reception unit 361c. These functional units are implemented by the processor and memory in the control device 36.

The tether controller 361a controls the deployment and storage of the tether 31. For example, the tether controller 361a opens a lid (not shown) provided to the storage part 33. This brings the tether 31 into a releasable state in which it can be released from the storage part 33. The tether controller 361a supplies gas from the gas supply part 34 to the tether 31 by controlling the degree of opening of the electromagnetic valve 35. The tether 31 expands and deploys to form a predetermined shape as its interior is filled with the supplied gas, and assumes a state in which it can experience atmospheric drag. As the interior of the tether 31 is filled with gas, the predetermined shape of the tether 31 can be maintained easily. For example, the end portion 31F of the tether 31 can be prevented from winding back because of the recoil at the end of the deployment. This effect can be particularly noticeable when the tether 31 forms a flat shape. The rate at which the tether 31 is deployed by the supply of gas is not limited to a specific value. For example, the tether 31 can be deployed at a rate requiring several hours to extend one meter, or at a rate requiring several days to several months for full deployment. As the tether 31 experiences atmospheric drag, the spacecraft 2, carrying the deorbit device 3, gradually lowers its altitude, and eventually departs from its orbit. The time it takes for the spacecraft 2 to descend to the altitude at which the spacecraft reenters the Earth's atmosphere since deorbit initiation is not limited to a specific value. It may range from several hours to several weeks, months, years, or even several decades.

For example, the tether controller 361a may control the deployment rate of the tether 31 through control of the gas supply part 34 or the degree of opening of the electromagnetic valve 35. The tether controller 361a may control the deployment rate of the tether 31 based on a ratio of broken detection lines 39L due to a collision with debris in the debris sensor 39 that is provided to at least a portion of the tether 31. For example, the tether controller 361a may deploy the tether 31 by a predetermined length when the ratio reaches a predetermined threshold. For example, the tether controller 361a may control the deployment rate of the tether 31 based on an altitude detected by the position sensor 40. More specifically, the tether controller 361a may maintain a fixed ratio between a descent rate of the deorbit device 3 (spacecraft 2) and the deployment rate of the tether 31. For example, the tether controller 361a may deploy the tether 31 by a predetermined length each time the spacecraft 2 (deorbit device 3) descends by a predetermined altitude. According to this feature, the portion of the debris sensor 39 that has not been broken by a collision with debris can be constantly deployed as the spacecraft 2 lowers its altitude, so that the accuracy of debris detection is improved.

For example, the environmental information processing unit 361b can store information about collisions with debris detected by the debris sensor 39 (debris information) in the storage unit 362. For example, the debris information may include a position of collision with debris, size of debris, time of collision with debris, and direction of collision with debris. The environmental information processing unit 361b can store the debris information in the storage unit 362 after associating it with the position information of the debris detected by the position sensor 40 (debris information). For example, the environmental information processing unit 361b can store the debris information in the storage unit 362 after associating it with the altitude, or the latitude and longitude, of the debris. For example, the environmental information processing unit 361b can divide the altitude, or the latitude and longitude, of the debris into predetermined ranges, and store the debris information in the storage unit 362 after sorting it into these ranges. For example, the environmental information processing unit 361b can store the debris information in the storage unit 362 after associating it with parameters for identifying the orbit of the debris.

The transmission/reception unit 361c sends and receives signals and data to and from some external equipment by controlling the communication device 37. More specifically, the transmission/reception unit 361c may control the communication device 37 to send and receive signals and data to and from a management apparatus on the ground, other spacecraft, or various apparatuses such as other deorbit devices mounted on other spacecraft.

The deorbit device according to this embodiment has a function of detecting environmental information such as information about collisions with debris, in addition to its primary function of deorbiting an object such as spacecraft. Environmental information can be acquired this way without manufacturing dedicated apparatuses for collecting environmental information or launching them into space. The deorbit device not just removes an object from an orbit, but offers additional value that is to detect environmental information, thus promoting the utilization of the deorbit device.

### (3) Modifications of tether 31

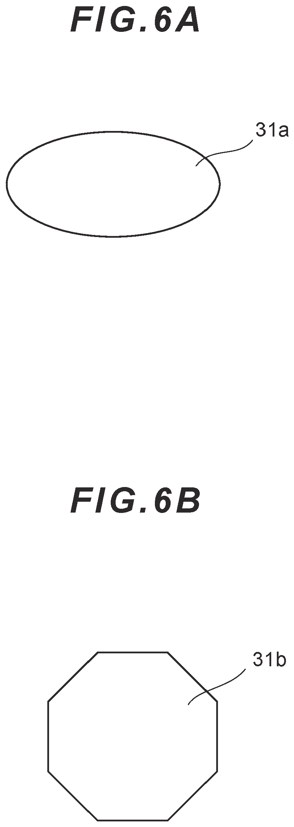

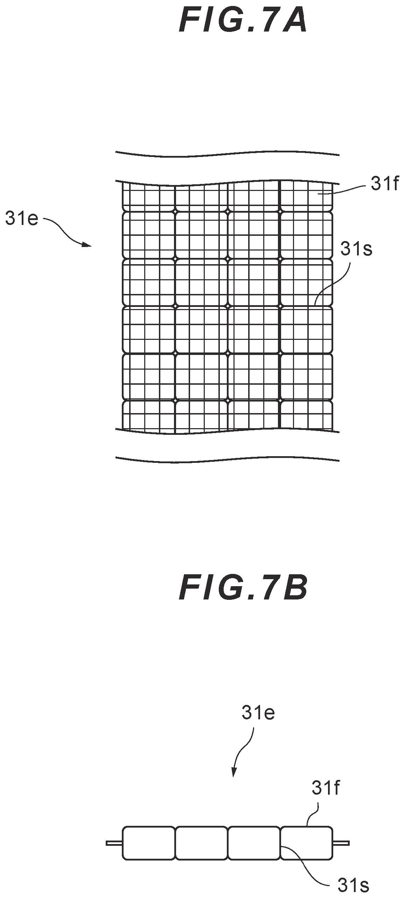

Examples of modified tethers 31 of the deorbit device 3 are described with reference to Figure 6A to Figure 6D, Figure 7A, and Figure 7B. Figure 6A to Figure 6D are schematic diagrams illustrating examples of cross sections perpendicular to a longitudinal direction of various modified tethers 31 of the deorbit device 3.

As shown in Figure 6A, the deorbit device 3 may have a tether 31a with an elliptic cross-sectional shape. The ellipticity of the elliptic cross-sectional shape of the tether 31a (the ratio of the length of the minor axis to the length of the major axis) is not limited to a specific value.

As shown in Figure 6B, the deorbit device 3 may have a tether 31b with an octagonal cross-sectional shape. The cross-sectional shape of the tether 31b may be triangular, rectangular, pentagonal, hexagonal, or any other polygonal shape. The polygonal shape is not limited to regular polygons and may be any irregular polygon.

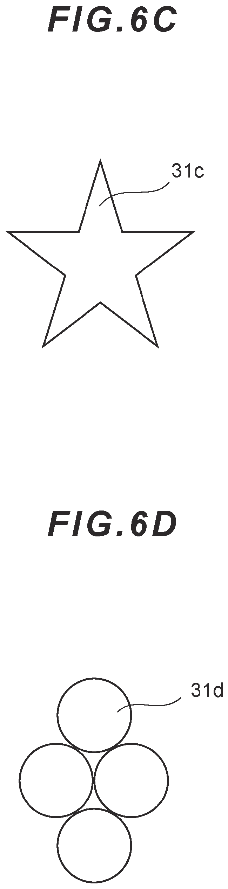

As shown in Figure 6C, the tether 31c of the deorbit device 3 may have a pentagrammic cross-sectional shape. The cross-sectional shape of the tether 31c is not limited to the pentagram shown in the drawing and may be any other star-shaped polygon, such as a hexagram, or a stellated figure.

As shown in Figure 6D, the deorbit device 3 may have four tethers 31d with a substantially circular cross-sectional shape. The number of the tethers 31d in the deorbit device 3 is not limited to four. There may be two, three, or five or more tethers. The tethers 31d may have the same radius, or may have different radii. The arrangement of the tethers 31d is not limited to a specific layout. For example, the tethers 31d may be arranged so that their centers are located near the vertices of a rhombus as shown in Figure 6D. Among the plurality of tethers 31d, at least two tethers 31 may be coupled to each other. At least any of the plurality of tethers 31d may be one of the tethers 31a, 31b, or 31c having other cross-sectional shapes shown in Figure 6A to Figure 6C, or a tether 31 having any other cross-sectional shape. The deorbit device 3 is provided with a plurality of tethers 31 so that, in the event of a gas leak from a hole in one of the tethers 31, the other tethers 31 can ensure the function of the deorbit device 3.

Figure 7A is a schematic diagram illustrating an example of a portion of a modified tether 31e as viewed from a direction perpendicular to a longitudinal direction. Figure 7B is a schematic diagram illustrating an example of a cross section taken parallel to a longitudinal direction of a portion of a modified tether 31e. The tether 31e may include a plurality of compartments (cells) 31f, which are separated by partitions 31s. Different compartments 31f may have the same dimensions, or may each have different dimensions. The partitions 31s may be formed by bonding together multiple thin film members of the tether 31e laminated in the direction perpendicular to the longitudinal direction, or formed by a different component from the thin film members of the tether 31e. This allows the tether 31 to maintain its structure more easily even when its longitudinal dimension is extended. The plurality of compartments 31f may be connected to each other via a gas supply channel (not shown), for example. The gas supply channel may be provided with a one-way valve. In the event of a gas leak from a hole in one of the compartments 31f, this configuration of the tether 31e prevents the gas from leaking from other compartments 31f, so that the tether 31e can be easily maintained in the deployed state.

### (4) Object on which deorbit device 3 is mounted

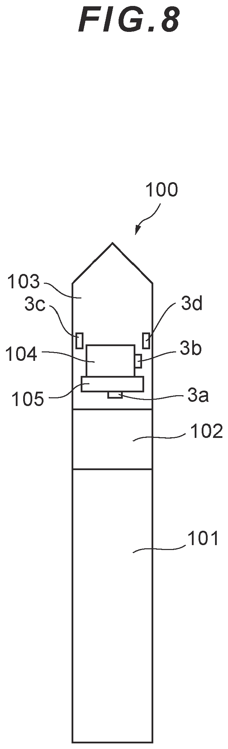

The object on which the deorbit device 3 is mounted is described with reference to Figure 8. In the example described above, the deorbit device 3 is mounted on a spacecraft 2. However, the object on which the deorbit device 3 is mounted is not limited to spacecraft 2.

Figure 8 is a schematic diagram of a rocket 100 as one example of a structure including an object on which the deorbit device 3 is mounted. For example, the rocket 100 includes a first engine unit 101, a second engine unit 102, and a cover part 103. For example, the rocket 100 operates as follows. First, the rocket 100 is launched from the ground when the first engine unit 101 is ignited. Once the rocket 100 reaches a certain altitude, the first engine unit 101 falls off from the rocket 100, and the second engine unit 102 is ignited. Once the rocket 100 reaches a predetermined altitude, the second engine unit 102 falls off from the rocket 100. A satellite separation unit 105 inside the cover part 103 is activated to separate an artificial satellite 104 from the cover part 103. The artificial satellite 104 separated from the cover part 103 starts to travel in orbit by a predetermined thrust device to execute a predetermined mission in orbit.

As shown in Figure 8, deorbit devices 3a, 3b, and 3c are mounted on the rocket 100. As shown in Figure 8, the deorbit device 3a may be mounted on the artificial satellite 104 as the target object. The deorbit device 3a may start deploying the tether 31 at a timing such as after the artificial satellite 104 has finished its mission, descending the artificial satellite 104 to remove it from the orbit. As described above, the deorbit device 3a may be mounted on an object that can be propelled in orbit and execute a predetermined mission, such as the artificial satellite 104, and this object may be removed from the orbit at a predetermined timing.

As shown in Figure 8, the deorbit device 3b may be mounted on the satellite separation unit 105 as the target object. The deorbit device 3b may start deploying the tether 31 at a timing such as after the separation of the artificial satellite 104 has been completed, descending the satellite separation unit 105 to remove it from the orbit. As shown in Figure 8, the deorbit device 3c may be mounted on the main body of the cover part 103 as the target object. The deorbit device 3c may start deploying the tether 31 at a timing such as after the separation of the artificial satellite 104 has been completed, descending the main body of the cover part 103 to remove it from the orbit. As described above, the deorbit devices 3b and 3c may be mounted on an object that is not propelled in orbit or that has no predetermined mission, and this object may be removed from the orbit at a predetermined timing. As described above, the deorbit device 3 can be mounted on an object that has no special mission. Thus, multiple deorbit devices 3 can be deployed in space, so that environmental information can be collected efficiently by the detection units of the multiple deorbit devices 3.

### (5) Mapping system 200

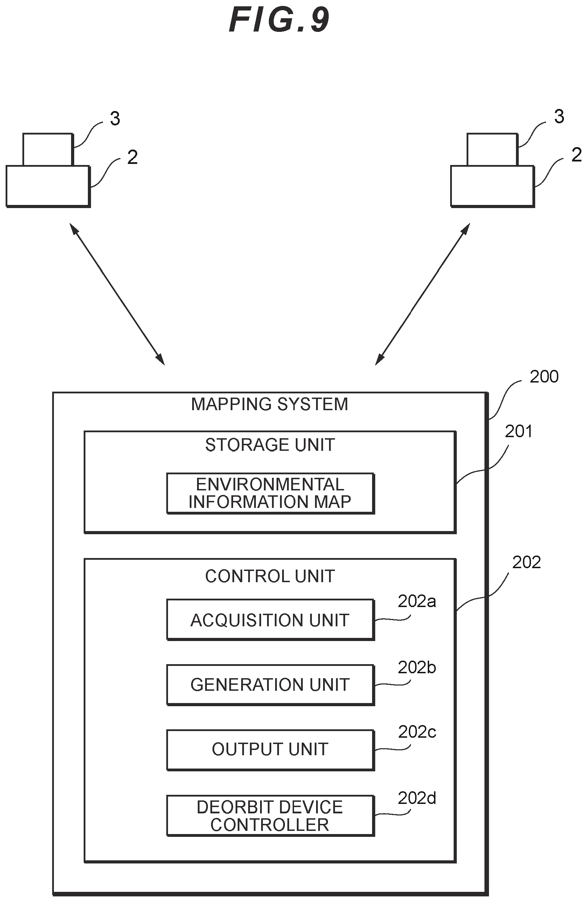

Figure 9 is a schematic diagram illustrating a configuration example of a mapping system 200 according to another embodiment. The mapping system 200 is configured to be able to communicate with the deorbit device 3 mounted on each of multiple spacecrafts 2. The mapping system 200 is an example of an information processing system for collecting environmental information from deorbit devices 3 and generating a map of environmental information associated with positions (e.g., altitude, latitude and longitude) in space based on the collected environmental information. The mapping system 200 may be configured with one or a plurality of computers installed at any location on the ground. The computer may include a processor, such as a CPU, and a memory, such as a RAM and a ROM, for example. The computer may include a communication device for communicating with the deorbit devices 3 and other information processing devices. The computer may further include output devices such as a speaker and a display, and input devices such as a mouse and a keyboard.

As shown in Figure 9, the mapping system 200 includes a storage unit 201 and a control unit 202 as examples of functional units. The control unit 202 includes an acquisition unit 202a, a generation unit 202b, an output unit 202c, and a deorbit device controller 202d. These functional units may be implemented by the processor and memory of the computer in the mapping system 200.

The storage unit 201 is an example of a second storage unit, and stores various types of data and programs. More specifically, the storage unit 201 may store an environmental information map generated by the generation unit 203 as will be described later.

The acquisition unit 202a acquires from each of the plurality of deorbit devices 3 environmental information detected by the plurality of deorbit devices 3. For example, the acquisition unit 202a may acquire information from the deorbit devices 3 about collisions with debris (debris information) that were detected by the debris sensors 39 of the deorbit devices 3. For example, the debris information may include a position of collision with debris, size of debris, time of collision with debris, and direction of collision with debris. For example, the debris information may be associated with altitude, or latitude and longitude, or to parameters for identifying the orbit.

The generation unit 202b generates an environmental information map based on the environmental information acquired by the acquisition unit 202a from each of the plurality of deorbit devices 3. The environmental information map may be information indicating a distribution of environmental information associated with positions in space, for example. For example, the environmental information map may be the information about debris (density, moving speed, size, etc., of debris) associated with altitude, or latitude and longitude, or parameters for identifying an orbit in space. The environmental information map may be information indicating a distribution of other environmental information detected by detection units in deorbit devices 3 and associated with positions in space. For example, other environmental information may include atmospheric density, the Earth's magnetic field, plasma, types and distributions of gravity and space radiation, changes in radio wave intensity (radio wave transmission from satellites), solar flare conditions, captured images of surrounding space, elementary particles, and the like. The environmental information may further include information about electromagnetic waves emitted by other artificial satellites (compliance with regulations on electromagnetic waves, intensity, direction, frequency (band), band widths, communication timing, information about senders and receivers of the electromagnetic waves, and so on).

The generation unit 202b may generate an environmental information map, for example, by statistically processing environmental information acquired by the acquisition unit 202a, or by analyzing environmental information acquired by the acquisition unit 202a using a trained machine-learning model, without being limited thereto. The generation unit 203b may store the generated environmental information map in the storage unit 201.

The output unit 202c outputs the environmental information map generated by the generation unit 202b. For example, the output unit 202c may output the environmental information map to an output device of the mapping system 200. The output unit 205 may transmit the environmental information map to the deorbit devices 3 or other information processing devices. The output unit 205 may transmit the environmental information map to a debris collecting apparatus.

The mapping system 200 generates an environmental information map based on the environmental information acquired by a plurality of deorbit devices 3. This facilitates more efficient generation of a comprehensive environmental information map, which would be difficult to achieve with a single deorbit device 3.

The deorbit device controller 202d generates a control signal for controlling the deorbit device 3, and sends it to the deorbit device 3 to control the same. For example, the deorbit device controller 202d may control the timing of activating the deorbit device 3 and starting the deployment of the tether 31, and may control the rate of deployment of the tether 31 from the deorbit device 3. The deorbit device controller 202d may control the deorbit device 3 based on the information included in the environmental information map. For example, when the amount of data of the environmental information (e.g., debris information) associated with a specific position in space (altitude, or latitude and longitude, or parameters for identifying an orbit) is relatively small, another deorbit device 3 can be controlled to move to this specific position (altitude, or latitude and longitude, or the parameters for identifying the orbit). The plurality of deorbit devices 3 can thus operate in coordination with each other under the control of the mapping system 200.

### (6) Others

The tether 31 may include a slave device in the end portion 31F. The slave device may be configured as a sensor for detecting a predetermined parameter, for example. The slave device may be configured as a communication module for sending and receiving communication signals to and from some external equipment, and may include an antenna and a communication circuit. The slave device may include a processor, such as a CPU, and a memory, such as a RAM and a ROM. The slave device may acquire the location information of the spacecraft 2 or itself, or the deployment status of the tether 31, and send and receive the information to and from the control unit 36, or to and from a management apparatus on the ground or other spacecraft.

The drag generator of the deorbit device 3 has been described herein as a tether 31, which experiences atmospheric drag as the drag on the movement of the spacecraft 2 in orbit, or a tether 31 containing a conductive material that generates the Lorentz force as the drag. The drag generator is not limited to the tether 31 and can be a thruster, such as a cold gas thruster. In this case, the reaction force of gas ejected from the thruster toward the moving direction of the spacecraft 2 creates the drag on the movement of the spacecraft 2 in orbit. The thruster can also double as the propulsion device for the spacecraft 2 to travel in orbit, or as the attitude control device of the spacecraft 2. The configuration of the drag generator designed to experience atmospheric drag is not limited to the inflatable structure or the tether shape. For example, the drag generator may be a cloth-like, fan-shaped, umbrella-shaped, or bag-shaped structure, and may be configured with a frame and a sheet.

In the embodiment described above, the deorbit device 3 includes the debris sensor 39 for detecting collisions with debris, as an example of the detection unit. The deorbit device 3 may include a detection unit for detecting an environment in outer space other than debris. For example, the environment detected by the detection unit may include atmospheric density, the Earth's magnetic field, plasma, types and distributions of gravity and space radiation, changes in radio wave intensity (radio wave transmission from satellites), solar flare conditions, captured images of surrounding space, elementary particles, and the like. The environment detected by the detection unit may further include information about electromagnetic waves emitted by other artificial satellites (compliance with regulations on electromagnetic waves, intensity, direction, frequency (band), band widths, communication timing, information about senders and receivers of the electromagnetic waves, and so on).

For example, the deorbit device 3 may calculate information indicating the trajectory and speed the deorbit device 3 during descent from orbit, based on the position information acquired by the position sensor 40 and the like. The deorbit device 3 may calculate the drag (such as atmospheric drag) it experiences while the deorbit device 3 is descending from the orbit based on this information, and calculate the atmospheric density based on the drag. The deorbit device 3 may provide an external device (e.g., mapping system 200) with the position information acquired by the position sensor 40 for it to perform this processing of calculating atmospheric density. More specifically, the mapping system 200 can acquire the information indicating the trajectory and speed of the deorbit device 3 from a plurality of deorbit devices 3 during descent from orbit. Comparing and analyzing the information acquired from multiple deorbit devices 3 over a long period of time enables the creation of an accurate and extensive map of atmospheric density.

In the embodiment described above, the debris sensor 39 is configured to include detection lines 39L on the insulating thin film. The configuration of the debris sensor 39 is not limited to this. For example, minute sensors such as piezoelectric elements and diaphragms may be provided to any area of the tether 31, to detect collisions with debris by measuring the vibration that occurs when debris hits the tether 31.

In the embodiment described above, the deorbit device 3 includes the position sensor 40, and the information about collisions with debris collected by the debris sensor 39 is associated with the position information detected by the position sensor 40 and stored in the storage unit 362. The deorbit device 3 may detect the time of collision with debris instead of the position information, and store the information about collisions with debris in the storage unit 362 after associating it with the time. Specifically, for example, the debris sensor 39 may acquire the time when it detects a collision with debris under the control by the control unit 361 (e.g., environmental information processing unit 361b), and include this time in the detection results provided to the control unit 361. The control unit 361 (environmental information processing unit 361b) may associate the information of the collision with debris with this time, and store the information in the storage unit 362. After that, the deorbit device 3 itself, or an external device (e.g., mapping system 200) that acquired from the deorbit device 3 the information of the collision with debris associated with the time, may generate position information of the collision with debris, by combining the acquired time and the information of descent trajectory or the like of the spacecraft 2.

The embodiment described above is given for facilitating the understanding of the present invention and not for limiting the interpretation of the present invention. Various elements in the embodiment, arrangements, materials, conditions, shapes, sizes and so on are not limited to the illustrated examples and may be changed as required. Various features illustrated in different forms of embodiment can be partially interchanged or combined.

### Reference Signs List

- 2: Spacecraft
- 3: Deorbit device
- 31, 31a, 31b, 31c, 31d, 31e: Tether
- 31f: Compartment
- 31s: Partition
- 31F, 31T: End portion
- 33: Storage part
- 34: Gas supply part
- 35: Electromagnetic valve
- 36: Control device
- 37: Communication device
- 38: Power supply unit (battery unit and power generation unit)
- 39: Debris sensor
- 39L, 39La, 39Lb: Detection line
- 40: Position sensor
- 361: Control unit
- 361a: Tether controller
- 361b: Environmental information processing unit
- 361c: Transmission/reception unit
- 362: Storage unit
- 100: Rocket
- 101: First engine
- 102: Second engine unit
- 103: Cover part
- 200: Mapping system
- 201: Storage unit
- 202: Control unit
- 202a: Acquisition unit
- 202b: Generation unit
- 202c: Output unit
- 202d: Deorbit device controller

## Claims

1. A deorbit device mounted on an object that moves in an orbit in space, the deorbit device comprising:
a drag generator configured to generate drag on a movement of the object in the orbit;
a detection unit configured to detect environmental information indicating a predetermined environment while the drag generator is generating the drag;
a storage unit; and
an environmental information processing unit configured to store the environmental information in the storage unit.

2. The deorbit device according to claim 1, wherein the detection unit is provided to at least a portion of the drag generator.

3. The deorbit device according to claim 1, further comprising a position acquisition unit configured to acquire position information indicating a position associated with the predetermined environment while the drag generator is generating the drag, wherein
the environmental information processing unit is configured to store in the storage unit the environmental information and the position information associated with each other.

4. The deorbit device according to claim 3, wherein the position acquisition unit is configured to acquire an altitude of the deorbit device as the position information when the detection unit detects the environmental information.

5. The deorbit device according to claim 4, wherein the position acquisition unit is configured to further acquire a latitude and a longitude of the deorbit device as the position information when the detection unit detects the environmental information.

6. The deorbit device according to claim 1, wherein the detection unit is configured to acquire a time when the environmental information is detected, and to detect the environmental information including the time.

7. The deorbit device according to claim 1, wherein the drag generator is configured to be deployable to form a predetermined shape for experiencing atmospheric drag as the drag.

8. The deorbit device according to claim 7, wherein the drag generator is configured to expand into the predetermined shape by gas supplied to an interior of the drag generator.

9. The deorbit device according to claim 7 or 8, wherein the detection unit
includes a conductive line provided to at least a portion of the drag generator, and is configured to detect, as the environmental information, information relating to a collision with a floating object in space, based on breakage of the conductive line caused by a collision with the floating object in space.

10. The deorbit device according to claim 9, wherein the detection unit is configured to detect a direction of a collision with the floating object in space, based on a position of a first collision with the floating object in space and a position of a second collision with the floating object in space.

11. The deorbit device according to claim 10, wherein the detection unit is configured to further detect a speed of a collision with the floating object in space, based on a time of the first collision and a time of the second collision.

12. The deorbit device according to claim 1, further comprising a power supply unit configured to supply power to the deorbit device.

13. The deorbit device according to claim 12, wherein the power supply unit includes a battery unit configured to maintain power to be supplied to the deorbit device, and/or a power generation unit configured to generate power to be supplied to the deorbit device.

14. The deorbit device according to claim 1, further comprising a communication unit configured to perform communication relating to the environmental information.

15. The deorbit device according to claim 14, further comprising a second communication unit configured to perform communication relating to the environmental information in a different manner from that of the communication unit.

16. The deorbit device according to claim 14, wherein the communication unit is configured to communicate the environmental information with a ground-based information processing device, another object moving in orbit in space, or another deorbit device of the other object.

17. An information processing system comprising:
a second storage unit;
an acquisition unit configured to acquire the environmental information from each of a plurality of the deorbit devices according to claim 1 and to store the information in the second storage unit; and
a generation unit configured to generate a distribution of the environmental information in space, based on the environmental information stored in the second storage unit.
